# EUROPÄISCHE PATENTANMELDUNG

(11) **EP 3 048 705 A1**
(43) Veröffentlichungstag der Anmeldung: **27.07.2016**
(21) Anmeldenummer: 15151934.5
(22) Anmeldetag: 21.01.2015
(51) Int. Cl.: H02K 3/34, H02K 15/02

(54) **Elektrische rotierende Maschine mit durch Fasergewebe versteiftem Blechpaket**

(71) Anmelder: Siemens Aktiengesellschaft, 80333 München (DE)
(72) Erfinder: Kümmlee, Horst, 13505 Berlin (DE)

(57) **Zusammenfassung**

Die Erfindung betrifft eine elektrische rotierende Maschine, insbesondere Hochspannungsmaschine, aufweisend mindestens ein Blechpaket (1), welches mindestens zwei gestapelte Elektrobleche (6) aufweist. Um deren mindestens ein Blechpaket (1), im Vergleich zum Stand der Technik, möglichst kostengünstig und platzsparend gegen Zug und Torsion zu versteifen, wird vorgeschlagen, dass die elektrische rotierende Maschine ein mechanisch tragfähiges Fasermaterial (5) aufweist, welches in einer Nut (N) des Blechpakets (1) angeordnet ist und dafür vorgesehen ist, zumindest einen Teil der gestapelten Elektrobleche (6) des Blechpakets (1) miteinander zu verbinden und das Blechpaket (1) gegen Zug und/oder Torsion zu versteifen.

## Beschreibung

Die Erfindung betrifft eine elektrische rotierende Maschine, insbesondere Hochspannungsmaschine, aufweisend mindestens ein Blechpaket, welches mindestens zwei gestapelte Elektrobleche aufweist.

Die Erfindung kommt insbesondere bei Hochspannungsmaschinen mit Formspulen und einer Leistung von mindestens 1 MW, zum Einsatz. Vorteile ergeben sich insbesondere bei hochpoligen Maschinen mit acht oder mehr Polen. In einer derartigen elektrischen rotierenden Maschine müssen die aus Elektroblechen gestapelten Blechpakete gegen Zug und Torsion versteift werden.

Üblicherweise werden zur Versteifung der gestapelten Elektrobleche eines Blechpakets in einer derartigen elektrischen rotierenden Maschine Spannbolzen verwendet, welche die zwei Endplatten des Blechpakets, auch Druckplatten genannt, miteinander verbinden.

Ein weiterer Weg, die Elektrobleche eines Blechpakets zu versteifen, ist es, zusätzliche Profile am Ständerrücken des Blechpakets anzuschweißen. Die äußeren Profile können auch formschlüssig und durch Einwalzen umgeformt befestigt werden.

Beide oben genannte Methoden können auch miteinander kombiniert werden. Sie wirken sich jedoch negativ auf die Kosten für die elektrische rotierende Maschine und auf den benötigten Bauraum aus. Insbesondere das Weglassen der Rückenprofile erlaubt größere Blechpaketdurchmesser bei gleicher Achshöhe oder eine Reduzierung der Achshöhe bei gleicher Leistung. Diese Baugrößenreduktion ist bei vielen Applikationen vorteilhaft.

Werden die Jochhöhen sehr gering, entsteht ein Missverhältnis zwischen Zahnhöhe und Jochhöhe. Die Versteifung durch die Spannbolzen und/oder der am Ständerrücken des Blechpakets angeschweißten Profile kann einerseits kaum mehr im Zahnbereich wirken, andererseits bietet die Jochhöhe keinen Platz für zusätzliche Spannbolzen. Für Versteifungsprofile am Blechpaketrücken wird zusätzlicher Bauraum benötigt.

Aus EP 1851845 ist ein Elektromotor, insbesondere ein Linearmotor, bekannt, welcher einen aus Elementarblechpaketen gebildeten segmentierten Teil umfasst. Jedes Elementarblechpaket weist auf der Seite eines Übergangs zu einem benachbarten Elementarblechpaket einen Teilzahn auf, wobei zwei Teilzähne von zwei benachbarten Elementarpaketen einen mit einer Übergangsspule umwickelten Übergangszahn bilden. Die Übergangsspule ist so gegen den Boden der beiden den Übergangszahn umschließenden Nuten gepresst, dass die beiden Teilzähne aneinander gedrückt bleiben und damit für eine steife Verbindung des segmentierten Teils sorgen.

Der Erfindung liegt die Aufgabe zugrunde, eine elektrische rotierende Maschine anzugeben, deren Blechpaket bzw. Blechpakete möglichst kostengünstig und platzsparend gegen Zug und Torsion versteift ist bzw. sind.

Eine Versteifung gegen Zug bedeutet in diesem Fall ein axiales Halten der Bleche, wobei eine Versteifung gegen Torsion in diesem Fall durch Übertragung des lokalen Drehmomentes zu den Ableitungspunkten des Ständers erreicht werden soll.

Die Aufgabe wird erfindungsgemäß dadurch gelöst, dass die elektrische rotierende Maschine ein mechanisch tragfähiges Fasermaterial aufweist, welches in einer Nut des Blechpakets angeordnet ist und dafür vorgesehen ist, zumindest einen Teil der gestapelten Elektrobleche des Blechpakets miteinander zu verbinden und das Blechpaket gegen Zug und/oder Torsion zu versteifen.

Die Vorteile der Erfindung bestehen insbesondere darin, dass die Verwendung von Fasermaterialien, welche auf Tragfähigkeit optimiert sind, zu einer Einsparung von Kosten und Bauraum führt, da beispielsweise der Einbau von Spannbolzen zu einer Vergrößerung des Durchmessers des Motors führt.

In besonders vorteilhafter Weise weist das mechanisch tragfähige Fasermaterial Fasern auf, welche als Traggebilde ausgeführt sind und so konstruiert sind, dass eine hohe Tragfähigkeit gewährleistet wird. Diese Fasern können beispielsweise aus Aramide, auch PPTA, wie beispielsweise Kevlar bestehen aber auch aus Glasfasern oder Kohlefasern, auch Carbonfasern genannt, bestehen, wobei letztere elektrisch gut leitfähig sind, was entsprechend bei der elektromagnetischen Dimensionierung der Maschine beachtet werden muss. Weiterhin können die Materialien auch miteinander kombiniert werden. Generell weisen Isolierbänder für die Windungen einer Spule und/oder eines Teilleiters einer Spule ein faserverstärktes Trägerband auf, welches aber nur dazu dient, die Konsistenz des Bandes, welches als Isolationschicht vorgesehen ist, zu erhalten. Neu ist hierbei, dass das Fasermaterial, welches beispielswiese als Fasermatte ausgeführt ist, mechanisch tragfähig ist und zur Erhöhung der mechanischen Festigkeit des Blechpaketkörpers eingesetzt wird. Die Ausführung der Fasern des Fasermaterials als Traggebilde ist vorteilhaft, da so andere zur Versteifung des Blechpakets vorgesehene Komponenten entfallen können und deshalb sowohl Platz als auch Kosten eingespart werden.

Bei einer bevorzugten Ausführungsform ist das mechanisch tragfähige Fasermaterial in der Nut als Nutstreifen oder als Nutkasten ausgeführt. Dies ist vorteilhaft, weil das Blechpaket platzsparend versteift wird. Außerdem kann die versteifende Wirkung bei Blechpaketen mit geringer Jochhöhe gleichmäßiger erzielt werden. Es werden weder eine mechanisch zusätzliche Jochhöhe noch Bauraum am Blechpaketrücken für zusätzliche Profile benötigt. Bei der Montage als Nutkasten wird das Fasermaterial beispielsweise U-förmig in die Nut eingelegt, wobei danach mindestens eine Wicklungsspule eingesetzt wird und wobei die radial nach innen überstehenden Enden des Fasermaterials beispielsweise durch Umfalzen über der eingesetzten Spule geschlossen werden.

Bei einer weiteren vorteilhaften Ausgestaltung ist das mechanisch tragfähige Fasermaterial mit einem Harz getränkt. Indem die isolierende Wirkung des getränkten Fasergewebes zumindest teilweise genutzt wird, um die Hauptleiter der Pole gegen das Blechpaket zu isolieren, wird Bauraum eingespart. Unter Umständen kann der bisher verwendete Nutkasten entfallen, sodass die zusätzliche Wandstärke und Wärme-Isolationswirkung kompensiert werden.

In besonders vorteilhafter Weise wird durch die Tränkung des mechanisch tragfähigen Fasermaterials mit dem Harz ein fester Verbund zum Blechpaket gebildet. Dies führt zu einer Einsparung der Spannbolzen und/oder sonstiger Spannelemente.

In einer vorteilhaften Ausführungsform ist das mechanisch tragfähige Fasermaterial an den Endpartien des Blechpakets befestigt. Dies ist besonders vorteilhaft, da so die mechanische Stabilität und Versteifung des Blechpakets verbessert wird.

Bei einer weiteren bevorzugten Ausgestaltung ist das mechanisch tragfähige Fasermaterial für die Erzeugung einer axialen Vorspannung zwischen den gestapelten Elektroblechen vorgesehen. Dies ist besonders vorteilhaft, da so Spannelemente und/oder Spannbolzen zur Erzeugung der axialen Vorspannung ersetzt werden können. Dies führt wiederum zu einer Einsparung von zusätzlichem Bauraum und Kosten.

Im Folgenden wird die Erfindung anhand der in den Figuren dargestellten Ausführungsbeispiele näher beschrieben und erläutert.

Es zeigen:
- FIG 1: eine schematische dreidimensionale Darstellung des Blechpakets einer elektrischen rotierenden Maschine nach dem Stand der Technik,
- FIG 2: einen Querschnitt durch einen Teil eines Ausführungsbeispiels eines Blechpaketes mit in den Nuten eingelegten Nutstreifen,
- FIG 3: einen Querschnitt durch einen Teil eines weiteren Ausführungsbeispiels eines Blechpaketes mit in den Nuten eingelegten Nutkästen und
- FIG 4: einen Querschnitt durch einen Teil eines weiteren Ausführungsbeispiels eines Blechpaketes mit in den Nuten eingelegten Nutkästen sowie in den Nuten verlaufenden isolierten Spulen.

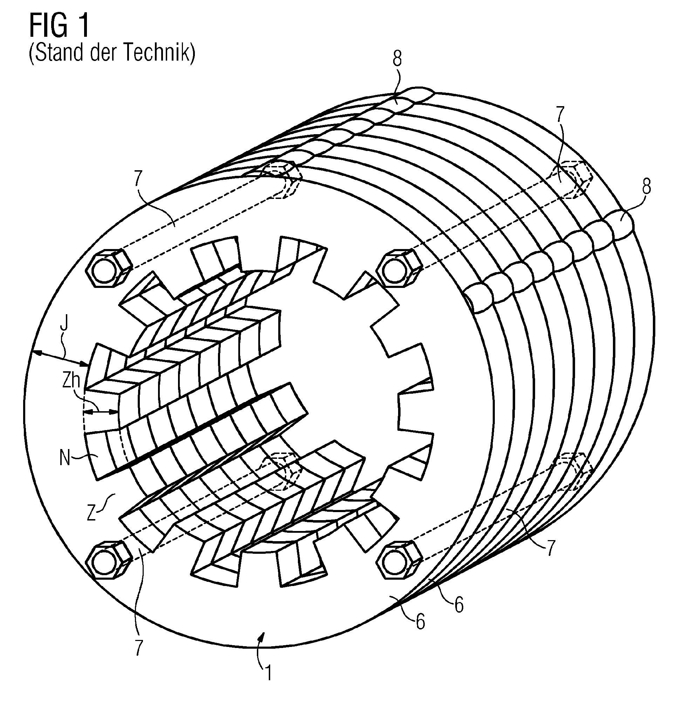

FIG 1 zeigt eine schematische dreidimensionale Darstellung eines Blechpakets 1 einer elektrischen rotierenden Maschine nach dem Stand der Technik. Das Blechpaket 1, hier auch Statorblechpaket oder Ständerblechpaket, weist Nuten N zum Einlegen der Statorwicklungen oder Ständerwicklungen auf und besteht aus gestapelten Elektroblechen 6. Diese Konstruktion muss gegen Zug und Torsion versteift werden, was nach dem Stand der Technik mit Hilfe von Spannbolzen 7 geschieht, die die zwei Endplatten, auch Druckplatten genannt, des Blechpakets miteinander verbinden. Ein weiterer Weg die Elektrobleche 6 des Blechpakets 1 zu versteifen ist zusätzliche Profile 8 am Ständerrücken des Blechpakets 1 anzuschweißen. Beide oben genannte Maßnahmen können auch miteinander kombiniert werden. Werden die Jochhöhen J sehr gering, entsteht ein Missverhältnis zwischen Zahnhöhe Zh und Jochhöhe J. Die Versteifung durch die Spannbolzen 7 und/oder der am Ständerrücken des Blechpakets angeschweißten Profile 8 kann einerseits kaum mehr im Zahnbereich wirken, andererseits bietet die Jochhöhe J keinen Platz für zusätzliche Spannbolzen 7. Für Versteifungsprofile 8 am Blechpaketrücken wird zusätzlicher Bauraum benötigt.

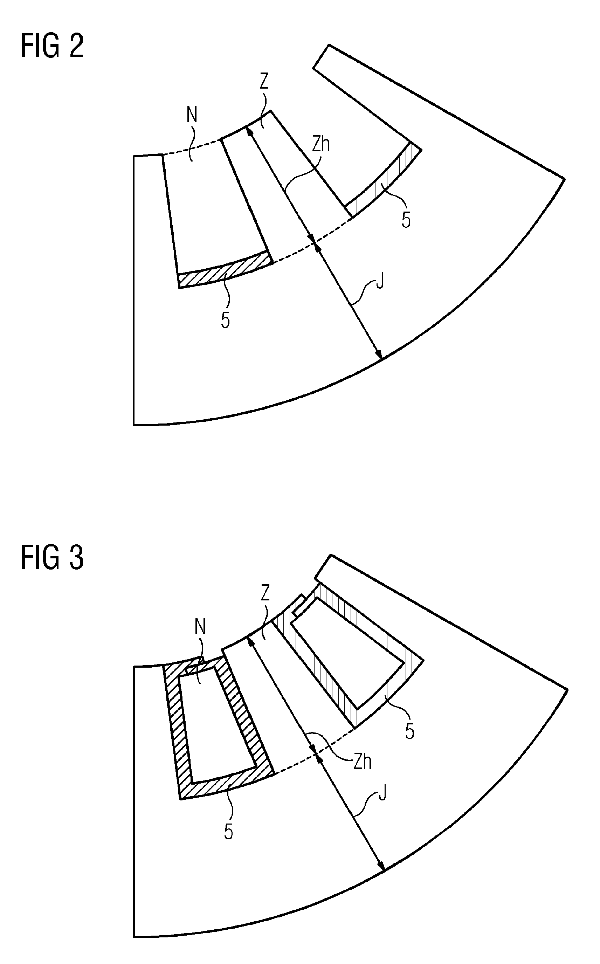

FIG 2 zeigt einen Querschnitt durch einen Teil eines Ausführungsbeispiels eines Blechpaketes mit in den Nuten eingelegten Nutstreifen aus einem mechanisch tragfähigen Fasermaterial 5. Das Fasermaterial 5 kann hierbei auf verschiedene Weise eingebracht, beispielsweise eingelegt und/oder eingepresst, werden. Die Spulen 7 mit ihrer Hauptisolation 4 sind hier zugunsten der Übersichtlichkeit nicht dargestellt. Die Nutstreifen aus dem mechanisch tragfähigen Fasermaterial 5 verlaufen so in axialer Richtung durch die Nuten N der einzelnen Elektrobleche 6 über das gesamte Blechpaket 1 und verbinden diese so miteinander. Das Fasermaterial 5 kann beispielsweise aus Aramide, auch PPTA, wie beispielsweise Kevlar, aber auch aus Glasfaser oder Kohlefaser, auch Carbonfaser genannt, bestehen, wobei letztere elektrisch gut leitfähig sind. Die Materialien können auch miteinander kombiniert werden.

Durch Tränkung des mechanisch tragfähigen Fasermaterials 5 mit dem Harz entsteht ein fester Verbund zum Blechpaket 1, welcher keine Lufteinschlüsse aufweist, was dazu führt, dass Spannbolzen und/oder sonstige Spannelemente eingespart werden können. Weiterhin kann das mechanisch tragfähige Fasermaterial 5 zusätzlich an den Endpartien des Blechpakets 1 befestigt werden, um so die mechanische Stabilität und die Versteifung des Blechpakets 1 zu verbessern.

FIG 3 zeigt einen Querschnitt durch einen Teil des Blechpaketes mit dem in den Nuten eingelegten mechanisch tragfähigen Fasermaterial 5, welches als Nutkästen ausgeführt ist. Die Spulen 7 mit ihrer Hauptisolation 4 sind hier zugunsten der Übersichtlichkeit nicht dargestellt. Analog zu FIG 2 verlaufen die Nutkästen aus dem Fasermaterial 5 so in axialer Richtung durch die Nuten N der einzelnen Elektrobleche 6 über das gesamte Blechpaket 1 und verbinden diese so miteinander. Bei der Montage wird das Fasermaterial 5 als Matte bzw. Platte U-förmig in die Nut N eingelegt. Danach legt man mindestens eine Wicklungsspule 7 ein und schließt die radial nach innen überstehenden Enden des Fasermaterials 5 durch Umfalzen über der Spule 7, wobei der entstehende Überlapp zur Abdichtung vorgesehen ist.

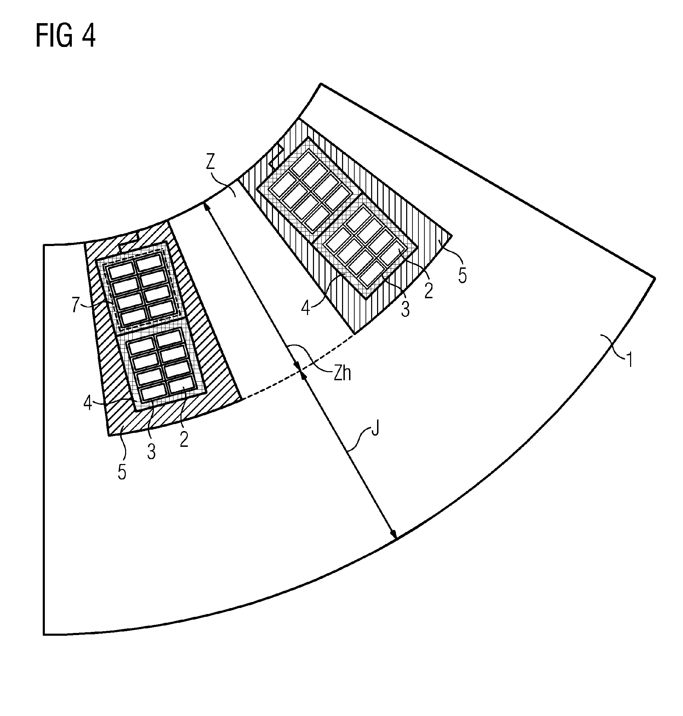

In FIG 4 sind ein Teil eines Blechpaketes mit dem in den Nuten N eingelegten mechanisch tragfähigen Fasermaterial 5 sowie jeweils exemplarisch zwei Spulen 7 in einer Nut N mit ihrer Wicklungsisolation, dargestellt. Generell weisen die Isolierbänder 3, 4 zur Isolation der Windungen einer Spule 7 und/oder eines Teilleiters 2 einer Spule 7 ein faserverstärktes Trägerband auf, welches aber nur dazu dient die Konsistenz des Bandes, welches als Isolationschicht verwendet wird, zu erhalten. Neu ist hierbei, dass das Fasermaterial 5, welches beispielswiese als Matte oder Platte ausgeführt ist, mechanisch tragfähig ist und zur Erhöhung der mechanischen Festigkeit des Blechpakets 1 eingesetzt wird. Das mechanisch tragfähige Fasermaterial 5 ist in FIG 4 exemplarisch in Form von Nutkästen ausgeführt und umschließt die zwei Spulen 7 und ihre Wicklungsisolation in der Nut N.

Die Wicklungsisolation baut sich in mehreren Schritten auf. Als innerstes die Teilleiterisolation 3 isoliert die einzelnen Teilleiter 2, welche die Windungen einer Spule 7 sind, zueinander. Die Spannungsdifferenz beträgt hier nur wenige 100 V. Um die Spule 7, welche aus mehreren Teilleitern 2 besteht, kommt die Hauptisolation 4, welche die Spulenspannung gegen das Erdpotential des Blechpakets 1 isolieren muss. Hier ist die Spannungsdifferenz 6.000 V - 14.000 V.

Unter und zwischen den Spulen liegen nach dem Stand der Technik isolierende Füllstreifen aus Glasfaserverbundmaterial. Diese haben neben der Isolationswirkung als Aufgabe den geometrischen Höhenausgleich, die Aufnahme von Temperaturmessfühlern und den mechanischen Schutz der Spule sicherzustellen. Da der Spannungsgradient zum Blechpaket 1, welches auf dem Erdpotential liegt, größer ist als zwischen den Spulen kann man als Ausführungsvariante eine Kombination aus reduzierter Hauptisolation 4 und einem Nutkasten wählen. In FIG 4 ersetzt das mechanisch tragfähige Fasermaterial 5, welches die gestapelten Elektrobleche 6 des Blechpakets 1 miteinander verbindet und das Blechpaket 1 gegen Zug und/oder Torsion versteift, den Nutkasten und übernimmt somit weiterhin die oben genannten Aufgaben der aus dem Stand der Technik bekannten isolierenden Füllstreifen aus Glasfaserverbundmaterial. Somit werden die zusätzliche Wandstärke und Wärme-Isolationswirkung kompensiert. Weiterhin kann das Fasermaterial 5 zumindest Teile der Hauptisolation 4 ersetzen, was zusätzlichen Bauraum einspart.

Zusammenfassend betrifft die Erfindung somit eine elektrische rotierende Maschine, insbesondere eine Hochspannungsmaschine, aufweisend mindestens ein Blechpaket 1, welches mindestens zwei gestapelte Elektrobleche 6 aufweist. Um deren mindestens ein Blechpaket 1, im Vergleich zum Stand der Technik, möglichst kostengünstig und platzsparend gegen Zug und Torsion zu versteifen, wird vorgeschlagen, dass die elektrische rotierende Maschine ein mechanisch tragfähiges Fasermaterial 5 aufweist, welches in einer Nut N des Blechpakets 1 angeordnet ist und dafür vorgesehen ist, zumindest einen Teil der gestapelten Elektrobleche 6 des Blechpakets 1 miteinander zu verbinden und das Blechpaket 1 gegen Zug und/oder Torsion zu versteifen.

## Patentansprüche

1. Elektrische rotierende Maschine, insbesondere Hochspannungsmaschine, aufweisend mindestens ein Blechpaket (1), welches mindestens zwei gestapelte Elektrobleche (6) aufweist, **dadurch gekennzeichnet, dass** die elektrische rotierende Maschine ein mechanisch tragfähiges Fasermaterial (5) aufweist, welches in einer Nut (N) des Blechpakets (1) angeordnet ist und dafür vorgesehen ist, zumindest einen Teil der gestapelten Elektrobleche (6) des Blechpakets (1) miteinander zu verbinden und das Blechpaket (1) gegen Zug und/oder Torsion zu versteifen.

2. Elektrische rotierende Maschine nach Anspruch 1,
**dadurch gekennzeichnet, dass** das mechanisch tragfähige Fasermaterial (5) Fasern aufweist, welche als Traggebilde ausgeführt sind und so konstruiert sind, dass eine hohe Tragfähigkeit gewährleistet wird.

3. Elektrische rotierende Maschine nach Anspruch 1 oder 2,
**dadurch gekennzeichnet, dass** das mechanisch tragfähige Fasermaterial (5) in der Nut (N) als Nutstreifen oder als Nutkasten ausgeführt ist.

4. Elektrische rotierende Maschine nach Anspruch 1 bis 3, **dadurch gekennzeichnet, dass** das mechanisch tragfähige Fasermaterial (5) mit einem Harz getränkt ist.

5. Elektrische rotierende Maschine nach Anspruch 4,
**dadurch gekennzeichnet, dass** durch die Tränkung des mechanisch tragfähigen Fasermaterials (5) mit dem Harz ein fester Verbund zum Blechpaket (1) gebildet wird.

6. Elektrische rotierende Maschine nach einem der Ansprüche 1 bis 5,
**dadurch gekennzeichnet, dass** das mechanisch tragfähige Fasermaterial (5) an den Endpartien des Blechpakets (1) befestigt ist.

7. Elektrische rotierende Maschine nach einem der Ansprüche 1 bis 6,
**dadurch gekennzeichnet, dass** das mechanisch tragfähige Fasermaterial (5) für die Erzeugung einer axialen Vorspannung zwischen den gestapelten Elektroblechen (6) vorgesehen ist.
